**Europäisches Patentamt**

**European Patent Office**

**Office européen des brevets**

(19)

(11) Veröffentlichungsnummer : **0 583 641 A1**

(12) # EUROPÄISCHE PATENTANMELDUNG

(21) Anmeldenummer : **93111711.3**

(22) Anmeldetag : **21.07.93**

(51) Int. Cl.$^5$ : **B29C 45/27**

(30) Priorität : **21.07.92 CH 2296/92**

(43) Veröffentlichungstag der Anmeldung :
**23.02.94 Patentblatt 94/08**

(84) Benannte Vertragsstaaten :
**AT BE DE ES FR GB IT NL**

(71) Anmelder : **Otto Hofstetter AG**
**Werkzeug- und Formenbau Zürcherstrasse 73**
**CH-8730 Uznach (CH)**

(72) Erfinder : **Hofstetter, Otto**
**Zürcherstrasse 73**
**CH-8730 Uznach (CH)**
Erfinder : **Fernandez, Luis**
**Seeblickstrasse 10**
**CH-8730 Uznach (CH)**

(74) Vertreter : **Seifert, Helmut E.**
**RITSCHER & SEIFERT Patentanwälte VSP**
**Kreuzstrasse 82**
**CH-8032 Zürich (CH)**

(54) **Verteilerblock und Verfahren zum Herstellen eines Verteilerblocks.**

(57)   Der Verteilerblock (20) dient zur Verteilung von fliessfähagem Material, insbesondere PET, aus welchem im Spritzgussverfahren Formteile hergestellt werden. Das Material wird durch einen Materialeinlass (24) zugeführt, der über ein sich verzweigendes Kanalsystem (26) mit Auslässen (22) verbunden ist, welche zu Formen für die Formteile führen. Das Kanalsystem (26) verläuft im wesentlichen längs einer Ebene. Der Verteilerblock besteht aus zwei Teilblöcken, die längs der genannten Ebene aneinander anliegen und stoffschlüssig miteinander verbunden werden, nachdem das Kanalsystem (26) so bearbeitet worden ist, dass sein Verlauf strömungsgünstig und seine Wandungen hydraulisch glatt sind. Als stoffschlüssige Verbindung bevorzugt man eine Hochtemperaturhartlötung in einer Unterdruckumgebung. Das Verfahren betrifft die Herstellung des Verteilerblocks.

Fig. 2

EP 0 583 641 A1

Die Erfindung betrifft einen Verteilerblock zum Verteilen von fliessfähigem Material nach dem Oberbegriff des Patentanspruch 1 und ein Verfahren zum Herstellen eines Verteilerblocks nach dem Oberbegriff des Patentanspruchs 5.

Verteilerblöcke dieser Art werden verwendet, um bei der Herstellung von Formteilen im Spritzgussverfahren das von einem Extruder im allgemeinen taktweise zugeführte Material auf eine Vielzahl von Formen zu verteilen, in welchen simultan je ein Formteil hergestellt wird. Die Verteilerblöcke weisen einen mit der Aufbereitungsvorrichtung verbundenen Materialeinlass und mehrere zu den Formen mündende Materialauslässe auf, wobei ein sich verzweigendes Kanalsystem für das Material vom Materialeinlass zu den Materialauslässen führt. Beim Verarbeiten von Polyethylenterephtalat, für das normalerweise die Kurzbezeichnung PET verwendet wird, ist es unerlässlich, dass während des ganzen Verteilungsvorgangs, d.h. im ganzen Kanalsystem, eine möglichst konstante Temperatur sowohl in Fliessrichtung des Materials als auch in jeden Querschnitt des Kanalsystems herrscht. Bei zu hohen Temperaturen bildet sich im PET ein unerwünscht hoher Anteil an Acethaldehyd. Bei zu tiefen Temperaturen ist das Material nicht, wie erwünscht, vollständig im amorphen glasartigen Zustand, sondern es enthält einen zu hohen Anteil an kristallinem Gefüge. Das kristalline Gefüge ist im fertigen Gebinde in Form von opaken Stellen z.B. Schlieren sichtbar.

Um die Temperatur des Materials zwischen dem Materialeinlass und den Materialauslässen möglichst konstant und in dem vorgeschriebenen Temperaturbereich zu halten, werden verschiedene Massnahmen getroffen.

Eine dieser Massnahmen besteht darin, den Verteilerblock möglichst gleichmässig auf einer Temperatur zu halten, die der gewünschten Temperatur des Materials entspricht. So beheizte Verteilerblöcke werden auch als Heissläuferblöcke bezeichnet. Durch die Beheizung des Verteilerblocks auf die erforderliche Temperatur soll verhindert werden, dass das Material Wärme an den Verteilerblock abgibt oder Wärme vom Verteilerblock aufnimmt. Die Beheizung kann auf verschiedene Weise erfolgen, beispielsweise durch im oder am Block angeordnete elektrische Heizwendel, durch konvektive Beheizung mittels eines in Heizkanälen zirkulierenden Heizmediums oder durch induktives Erhitzen des Verteilerblocks.

Da es, z.B. in Folge schwankender Umgebungstemperaturen, trotz der Beheizung des Verteilerblocks schwierig ist, die Temperatur und den Druck konstant zu halten, wird als andere Massnahme zur Verhinderung eines Temperatur- und Druckabfalls im Material zwischen dem Einlass und den Auslässen vorgesehen, das Material mit einer möglichst hohen Geschwindigkeit und möglichst kleinen inneren Friktionen durch den Verteilerblock zu fördern, so dass die Verweilzeit des Materials im Verteilerblock und die Bildung eines unerwünscht hohen Acetaldehydgehalts minimalisiert wird.

Eine hohe Geschwindigkeit des Materials ist auch anzustreben, um die zeitliche Dauer eines Takts des Spritzgussvorganges zu verkürzen bzw. in einem bestimmten Zeitabschnitt eine hohe Zahl solcher Spritzgussvorgänge durchzuführen um eine grosse Zahl von Formstücken zu erzeugen.

Aus Gründen der allgemeinen Materialbeanspruchung sowie aus energetischen Gründen besteht auch der Wunsch, den Druckabfall längs des Strömungsweges so klein wie möglich zu halten. Dadurch wird auch der notwendige Haltedruck, der zum Verhindern von Lunkerbildung im vergossenen Material während der Abkühlung der Formteile auszuüben ist, verringert.

Die folgenden theoretischen Überlegungen sollen das Wesen und die Bedeutung der vorliegenden Erfindung näher erläutern.

Der Druckabfall $\Delta\rho$ in einem geraden Kanal wird nach folgender Formel berechnet:

$$\Delta\rho = \lambda \cdot \hat{\upsilon}/2 \cdot \varrho/2 \cdot \ell/\delta$$

Dabei ist:

$\lambda$      die dimensionslose Widerstandszahl;

$\hat{\upsilon}$      die mittlere Geschwindigkeit;

$\varrho$      die Dichte;

$\ell$      die Länge des Kanalstückes, in welchem der Druck um $\Delta\rho$ abfällt;

A      die Querschnittsfläche des Kanals, und

$\delta$      = 4A/U der sogenannte hydraulische Durchmesser; bei Kreisquerschnitten ist A4/U = d.

Um den Druckabfall in gekrümmten Teilen von Kanälen und bei Abzweigungen zu berechnen, werden anstelle der Länge $\ell$ sogenannte "äquivalente" Längen L in die obige Formel eingesetzt.

Von den in der obigen Formel vorkommenden Grössen lässt sich die Dichte nicht beeinflussen, da sie in Abhängigkeit vom Material gegeben ist. Die mittlere Geschwindigkeit $\hat{\upsilon}$ soll, wie schon erwähnt aus diversen Gründen nicht klein sein. Die Kanallänge $\ell$ lässt sich nicht wesentlich verringern, da sie aus Gründen der Konstanthaltung der Temperatur sowie aus Platzgründen, z.B. um einen kleinstmöglichen Verteilerblock zu erhalten, ohnehin so klein wie möglich gewählt wird. Der hydraulische Durchmesser 4A/U lässt sich ebenfalls nicht

2

stark beeinflussen; um den Druckabfall klein zu halten, müsste dieser hydraulische Durchmesser gross sein. Dies hätte auch den günstigen Effekt, dass zur Förderung einer bestimmten zeitlichen Menge von Material nur eine kleine Geschwindigkeit nötig wäre, was im Sinne eines kleinen Druckabfalls erwünscht wäre. Nachteilig bei grossen hydraulischen Durchmessern ist aber die Gefahr des Entstehens eines Temperaturgradienten über dem Querschnitt, da in der Mitte des Kanals die Wirkung der Beheizung des Verteilerblockes nicht ausreicht.

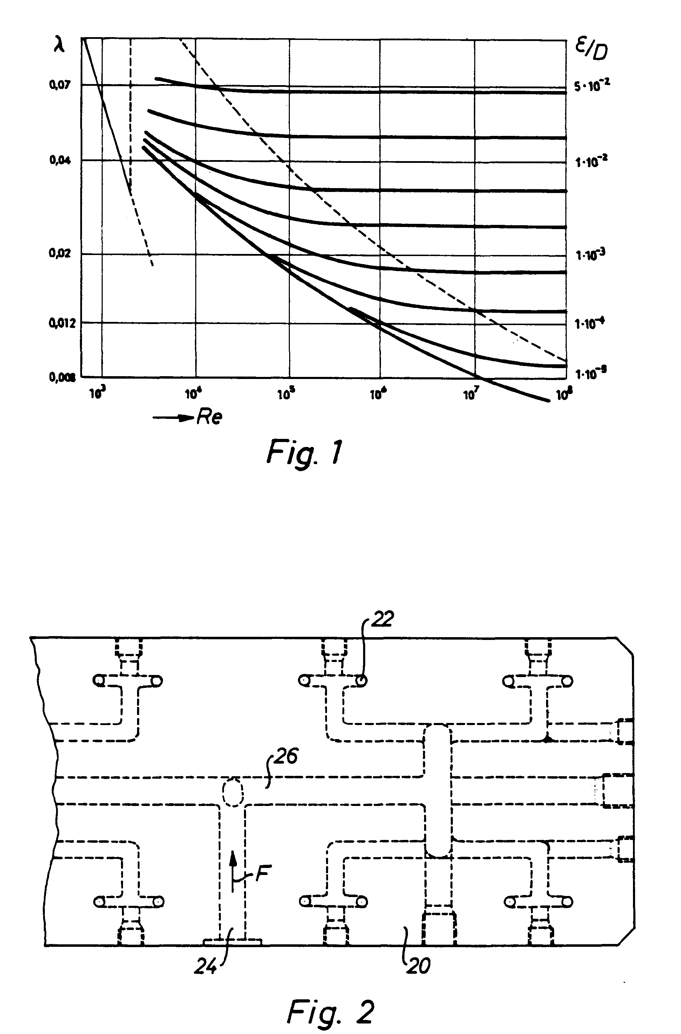

Zur Erreichung eines kleinen Druckabfalls $\Delta \rho$ ist also vor allem eine kleine Widerstandszahl $\lambda$ anzustreben. Figur 1 zeigt das bekannte Moody-Diagramm, in welchem $\lambda$ als Funktion der Reynoldzahl RE aufgetragen ist, mit der relativen Rauhigkeit $\varepsilon/\delta$ als Parameter.

Die Reynoldszahl RE ist eine dimensionslose Kennzahl und gibt u.a. an, ob eine Strömung laminar oder turbulent ist. Sie berechnet sich nach der Formel

$$RE = \hat{\upsilon} \cdot \delta / \gamma$$

Dabei ist

$\hat{\upsilon}$     die mittlere Geschwindigkeit;

A     der hydraulische Durchmesser und

$\gamma$     die kinematische Zähigkeit

Wie schon erwähnt, sind $\hat{\upsilon}$., A, U und natürlich auch $\gamma$ als Materialkonstante nur in engen Grenzen oder gar nicht wählbar, so dass die Reynoldszahl RE als praktisch gegeben betrachtet werden muss.

Aus dem Moody-Diagramm ist folgendes ersichtlich:
Bei Laminarströmungen, d.h. bei einer Reynoldszahl unter ca. 2300, nimmt $\lambda$ linear mit steigender Reynoldszahl und zwar unabhängig von der relativen Kanalrauhigkeit $\varepsilon/4A/U$ ab. Bei turbulenten Strömungen, d.h. bei Reynoldszahlen über 3000, ist $\lambda$ bei grosser relativer Kanalrauhigkeit $\varepsilon/D$ nahezu konstant, während $\lambda$ bei kleiner relativer Kanalrauhigkeit mit steigender Reynoldzahl abnimmt, bei bester Oberflächengüte sogar nahezu linear. Im Übergangsbereich, d.h. bei Reynoldszahlen zwischen 2300 und 3000, wo laminare und turbulente Strömungen möglich sind, ist $\lambda$ bei turbulenten Strömungen und bester Oberflächengüte $\varepsilon/D$ etwa 50% höher als bei laminaren Strömungen.

$\varepsilon$ ist dabei die in Radialrichtung gemessene Höhe der Rauhigkeit und D der Kanaldurchmesser. Bei nichtrunden Kanälen ist D zu ersetzen durch 4F/U.

Aus den obigen theoretischen Ausführungen lassen sich im Hinblick auf Verteilerblöcke folgende Schlüsse ziehen:

Die Verwendung von hydraulisch glatten Kanalwandungen mit einer geringen relativen Rauhigkeit $\varepsilon/D$ bringt vor allem im Bereich der turbulenten Strömungen grosse Vorteile in Bezug auf den Druckabfall.

Ein strömungsgünstig gestaltetes Kanalsystems liegt im Bereich zwischen laminarer und turbulenter Strömungen, da die von Durchmesseränderungen, Absätzen, Krümmungen etc. verursachten Druckabfälle kleiner sind.

Im Übergangsbereich, wo sowohl laminare wie turbulente Strömungen möglich sind, erhält man bei strömungsgünstiger Gestaltung des Kanalverlaufs eine Strömung mit entsprechend tiefen Widerstandszahlen während man bei einer strömungsungünstigen Kanalgestaltung turbulente Strömung mit entsprechend hohen Widerstandszahlen erhalten würde.

Zusammenfassend ist festzustellen, dass zur Minimalisierung des Druckabfalls ein strömungsgünstiger Verlauf des Kanalssystems und eine möglichst glatte Oberfläche der Kanalwandungen anzustreben sind.

Das Erzeugen solcher strömungsgünstiger Kanäle mit hydraulisch glatten Wandungen stellt ein grosses Problem bei der Herstellung von Verteilerblöcken dar. Bei den bisher üblichen, als Heissläufer verwendeten Verteilerblöcken wird das Kanalsystem durch Bohrungen im Verteilerblock gebildet. Diese Bohrungen können nur geradlinig und ausgehend von einer Aussenfläche des Verteilerblocks erzeugt werden. Aus Gründen eines optimalen Spritzguss-Vorgangs sollten alle Verbindungen zwischen dem Materialeinlass und den Materialauslässen gleich und relativ kurz sein und den gleichen Druckabfall verursachen; ausserdem sollten gleichzeitig eine möglichst grosse Anzahl von Formstücken hergestellt werden können. Um diese Forderungen zu erfüllen, müsste der Verteilerblock als kreisförmige Scheibe ausgebildet sein, und einen mittigen Einlass sowie radiale Auslässe aufweisen. Eine solche Anordnung ist aber insbesondere für eine gerätegestützte Handhabung der Formstücke nach deren Erzeugung sehr unvorteilhaft. Ausserdem ist ein so ausgebildeter Verteilerblock recht voluminös im Verhältnis zur Anzahl der jeweils erzeugbaren Formstücke, und es muss daher auch eine grosse Materialmasse vollständig beheizt werden, so dass der Energieverbrauch für die Beheizung des Verteilerblocks sehr hoch ist.

Weil solche kreisförmige oder gegebenenfalls polygonförmige Verteilerblöcke unvorteilhaft sind, verwendet man vorwiegend quaderförmige Verteilerblöcke mit einem sich mehrfach verzweigenden und Krümmungen beschreibenden Kanalsystem. Die Erzeugung dieses Kanalsystems ist aber mit vielen Schwierigkeiten verbunden. So müssen z.B. zur Herstellung von zwei Ästen eines gekrümmten Kanals zwei sich kreuzende Bohrungen hergestellt werden, und die äussersten Teile der Bohrungen, sofern sie nicht als Materialeinlass oder -auslass dienen, müssen nach dem Bohren wieder verschlossen werden. Ausserdem ist es unmöglich, Eckpartien abgerundet herzustellen, und es ist praktisch nicht möglich, Stufen im Kanalverlauf, die sich durch Querschnittänderungen bei Verzweigungsstellen ergeben, zu vermeiden bzw. durch Anschrägung strömungsgünstig zu gestalten. Es ist auch schwierig, beim Bohren entstehende Gräte zu entfernen, und ganz allgemein die Wandungen der Bohrungen so zu bearbeiten, dass sie hydraulisch vollkommen glatt sind. Ein- und ausspringende Ecken sowie Gräte sind aber der Anlass, dass sich Material anstaut, nicht weiterströmt und sich zersetzt. Bei einer gelegentlichen Mitnahme durch anderes Material führt dieses zersetzte Material zu Formteilen mit ungenügender Qualität, welche ausgesondert werden müssen. Mit anderen Worten, es ist heutzutage unmöglich, mit herkömmlichen Verteilerblöcken ein Kanalsystem zu erzeugen, welches genügend strömungsgünstig verläuft und hydraulisch genügend glatte Wandungen aufweist, welches den vorkommenden Druckabfall minimalisiert, um zu verhindern, dass sich solche unerwünschten Materialablagerungen im Bereich von Gräten und Ecken bilden.

Aufgabe der Erfindung ist es somit, einen Verteilerblock für Heissläufer der eingangs genannten Art zu schaffen, welcher eine strömungsgünstige Führung des Kanalsystems ohne Stufen, Ecken und Gräten, dafür aber mit hydraulich glatten Wandungen besitzt; als weitere Aufgabe der Erfindung wird betrachtet, ein Verfahren zur Herstellung eines Verteilerblocks mit strömungsgünstig geführten Kanälen und hydraulisch glatten Wandungen vorzuschlagen.

Diese Aufgaben werden erfindungsgemäss durch die Merkmale der kennzeichnenden Teile der Patentansprüche 1 bzw. 4 gelöst. Vorteilhafte Weiterbildungen des erfindungsgemässen Verteilerblocks und des erfindungsgemässen Verfahrens werden durch die entsprechenden abhängigen Patentansprüche umschrieben.

Der erfindungsgemässe Verteilerblock weist ein Kanalsystem auf, welcher ohne scharfe Ecken, Stufen und Gräten verläuft, und das Wandungen aufweist, die hydraulisch vollkommen glatt sind. Dies wird erreicht, indem die Ausnehmungen bei ihrer Bearbeitung in ihrer ganzen Länge bzw. quer zur Strömungsrichtung frei zugänglich sind, so dass es möglich ist, Gräten und vorspringende Ecken zu vermeiden, Stufen durch Abschrägung auszugleichen und die Qualität der Oberfläche durch verschiedene bekannte Verfahren so zu verbessern, dass man einen minimalen Druckverlust im Kanalsystem erhält und die Ansammlung von durch Gräten oder Rückströmungen zurückgehaltenem Material vermeidet. Auch das Prüfen der Oberflächengüte wird durch das erfindungsgemässe Kanalsystem wesentlich vereinfacht.

Obwohl der erfindungsgemässe Verteilerblock in verschiedenen, auch zylindrischen Formen hergestellt werden kann, und die Anlageflächen nicht eben sein müssen, werden quaderförmige Verteilerblöcke bevorzugt, wobei die Anlageflächen eben und parallel zu einer der Quaderflächen verlaufen.

Die flächige, stoffschlüssige Verbindung der beiden Teilblöcke kann eine hochwarmfeste Klebeverbindung sein. Bevorzugt wird aber eine Lötverbindung verwendet, wobei das Lot, z.B. in Folien oder Pastenform, zwischen die Teilblöcke gegeben wird.

Bei Verteilerblöcken, die aus zwei Teilblöcken bestehen, muss das Kanalsystem so angeordnet werden, dass sich die Ausnehmungen im wesentlichen über eine Ebene erstrecken, so dass sie von den Anlageflächen aus zugänglich sind. Wenn Verteilerblöcke mit anderen, komplizierteren Kanalsytemen benötigt werden, ist es möglich, einen oder beide Teilblöcke aus Blockelementen zu bilden, die längs weiterer Anlageflächen aneinander anliegen und ebenfalls durch Lötung oder Klebung miteinander verbunden sind. Diese zusätzlichen Anlageflächen können auch quer zur erstgenannten Anlagefläche verlaufen.

Das erfindungsgemässe Verfahren besteht im wesentlichen darin, dass man die an einem oder beiden Teilblöcken jeweils an einer Aussenfläche vorhandenen Ausnehmungen so bearbeitet, dass sie je einen Teil einer hydraulisch glatten Wandung eines strömungsgünstigen Kanalsystems bilden, die Teilblöcke anschliessend so zusammenfügt, dass aus den Ausnehmungen ein Kanalsystem entsteht, wobei ein Mittel für eine stoffschlüssige Verbindung zwischen die Teilblöcke gelegt wird, und dass man die Teilblöcke schliesslich flächig miteinander verbindet.

Es ist aber auch denkbar, die Ausnehmungen oder einen Teil der Ausnehmungen in einem Originalblock durch Bohrung oder Elektroerosion einzuarbeiten, dann diesen Originalblock längs einer das Kanalsystem schneidenden oder gegebenenfalls tangierenden Ebene in Teilblöcke zu zertrennen, anschliessend in der schon beschriebenen Weise die Ausnehmungen zu bearbeiten und die Teilblöcke anschliessend wieder zusammenzufügen.

Die Verbindung der Teilblöcke zum Verteilerblock und gegebenenfalls die Verbindung der Blockelemente zu Teilblöcken geschieht durch ein stoffschlüsses Verfahren wie z.B. Kleben oder Löten. Erfindungsgemäss werden die Verteilerblöcke durch Lötung zusammengefügt, da die Verbindungszone anders als beim Kleben, dadurch Eigenschaften erhält, die den Eigenschaften des Werkstoffs der Teilblöcke sehr ähnlich sind, wobei auch bei einer längerdauernden Verwendung der Verteilerblöcke in hohen Temperaturbereichen keine Alterungserscheinungen der Lötstellen eintreten. Dies im wesentlichen deshalb, weil beim Löten der Grundwerkstoff der Teilblöcke einerseits und das Lot anderseits gegenseitig ineinander diffundieren. Um dies zu ermöglichen, müssen die zu lötendenen Flächen metallisch blank, d.h. nicht nur frei von Verschmutzungen und konservierenden Fetten sondern auch frei von jeder Oxydschicht sein. Zur Entfernung solcher Oxydschichten verwendet man bei einer Lötung normalerweise ein Flussmittel. Da aber das Aufbringen des Flussmittels im vorliegenden Fall, wie bei allen grossflächigen oder schlecht zugänglichen Lötstellen, kaum möglich ist, wird eine Hochtemperaturhartlötung, in Unterdruckumgebung durchgeführt. Oberhalb einer gewissen Temperatur verdampfen dabei die Oxydschichten, so dass man blanke Oberflächen erhält.

Das Lötverfahren, bei welchem alle Teile in einem Mal verlötet werden, läuft wie folgt ab: Man befreit die zusammenzufügenden Anlageflächen von Schmutz und Fett, bringt das Lot in Form einer Paste oder Folie an, legt die zu verlötenden Teile, d.h. die Teilblöcke und gegebenenfalls die Blockelemente, in der gewünschten Anordnung auf -bzw. aneinander und spannt sie provisorisch zusammen. In einem Lötofen erfolgt dann der eigentlich Lötvorgang, wobei man den Ofenraum zuerst evakuiert, dann den Verteilerblock auf die Löttemperatur bringt und vorzugsweise anschliessend abkühlt, beispielsweise mittels eines Inertgases wie Stickstoff oder Argon. Die Löttemperatur liegt oberhalb der Schmelztemperatur des Lotes aber unterhalb der Schmelztemperatur des Grundwerkstoffs des Verteilerblocks, und selbsttverständlich oberhalb der Arbeitstemperatur bzw. der Temperatur des durch den Verteilerblock strömenden Materials. Da beim Lötverfahren der ganze Verteilerblock auf die Löttemperatur aufgeheizt wird, vermeidet man weitgehend das Entstehen von Spannungen im Fügebereich, so dass die Gefahr von Rissbildungen die von den Wandungen des Kanalsystems ausgehen könnten, praktisch nicht vorhanden ist. Ein wesentlicher und vorteilhafter Begleiteffekt des erfindungsgemässen Lötens besteht darin, dass beim Lötvorgang durch das Erhitzen eine Wärmebehandlung des Verteilerblockes integriert durchgeführt wird. Je nach dem Temperaturverlauf beim Abkühlen kann dabei eine weitere Glühung vorgenommen werden.

Zur Erzeugung einer guten Lötverbindung ist es wichtig, dass die zu verlötenden Anlageflächen nicht nur fettfrei sondern auch von bester Oberflächengüte sind; zu diesem Zwecke können sie in einfacher Weise bearbeitet werden, wenn die Teilblöcke zwecks Bearbeitung des Kanalsystems voneinander getrennt sind.

Im folgenden wird die Erfindung an Hand von bevorzugten Ausführungsbeispielen und Einzelheiten mit Bezug auf die Zeichnungen ausführlich beschrieben. Es zeigt:

Figur 1 :     ein Moodydiagramm;
Figur 2 :     einen Verteilerblock nach dem Stand der Technik;
Figur 3a:    einen Schnitt durch einen Verteilerblock nach dem Stand der Technik;
Figur 3b:    den in Figur 3a dargestellten Teilblock, hergestellt nach dem erfindungsgemässen Verfahren;
Figur 4a:    einen Schnitt durch einen Kanal nach dem Stand der Technik;
Figur 4b:    den in Figur 4a dargestellten Kanal, hergestellt nach dem erfindungsgemässen Verfahren;
Figur 5 :     einen Verteilerblock in einem Schnitt, mit zwischen den Teilblöcken angebrachtem Lot, vor dem Lötvorgang;
Figur 6 :     den in Figur 5 dargestellten Verteilerblock nach dem Lötvorgang;
Figur 7 :     einen Verteilerblock, dessen Teilblöcke aus mehreren Blockelementen bestehen, vereinfacht, in einem Schnitt; und
Figur 8:     einen weiteren Verteilerblock, dessen Teilblöcke aus je zwei Blockelementen bestehen, vereinfacht in einem Schnitt.

Der in Figur 2 dargestellte quaderförmige, plattenartige aus zwei Teilblöcken 20', 20" bestehende Verteilerblock 20, weist einen Materialeinlass 24 auf, über welchen das zu verarbeitende Material, z.B. aus einem nicht dargestellten Extruder, zugeführt wird. Ein sich verzweigendes Kanalsystem 26 bildet eine Verbindung für das Material zwischen dem Materialeinlass 24 und einer Vielzahl von Materialauslässen 22, die zu nicht dargestellten Formen münden, in welchen im Druck- bzw. Spritzgussverfahren simultan und taktweise aus dem Material Formteile erzeugt werden.

Das Kanalsystem 26 und Materialeinlass 24 erstrecken sich in Plattenrichtung, d.h. in einer Ebene, welche die Anlagefläche der beiden Teilblöcke 20', 20" bildet, während die Materialauslässe 22 quer dazu gerichtet sind. Die dargestellte Anordnung ist besonders vorteilhaft; erstens ist die Länge der durchflossenen Teile des Kanalsystem 26 vom Materialeinlass 24 zu allen Materialauslässen 22 gleich; zweitens durchströmen alle Materialmengen eine gleiche Anzahl von Krümmungen des Kanalsystems, wobei die durch die unterschiedlichen Ablenkungswinkel verschiedenen Druckabfälle sich nicht wesentlich voneinander unterscheiden; drittens sind Materialauslässe in einem regelmässigen Raster angeordnet, was für die weitere Handhabung der erzeugten Formteile sehr vorteilhaft ist.

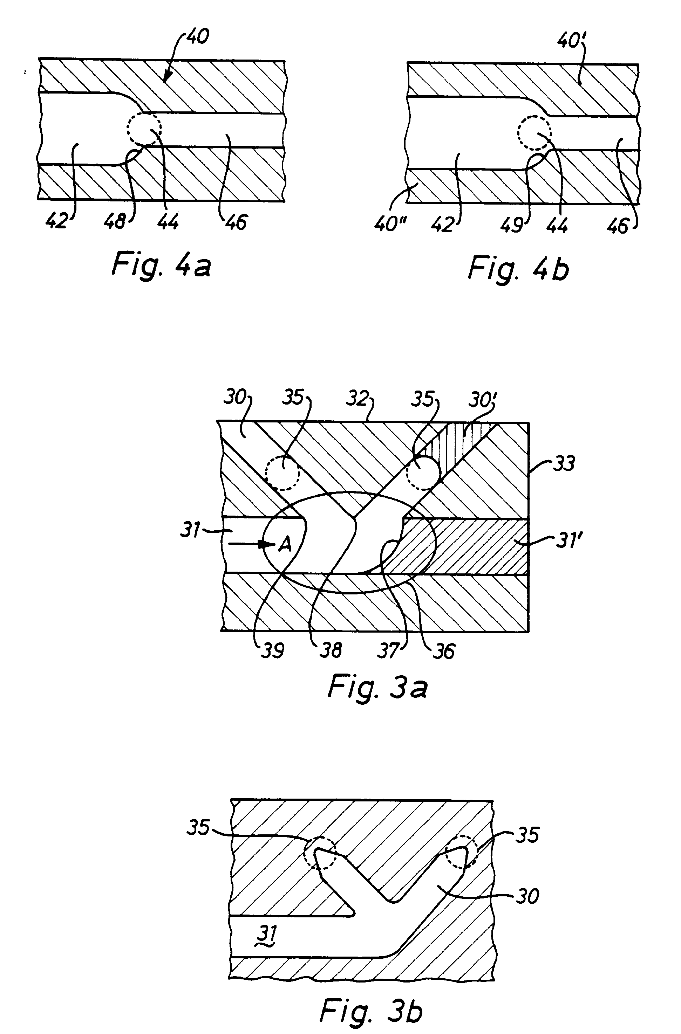

Die Figur 3a und 3b zeigen deutlich, wieviel einfacher die Herstellung des Kanalsystems in einem Verteilerblock ist, und wieviel strömungsgünstiger das Kanalsystem ausgebildet ist, wenn nicht wie bei Figur 3a nach dem bekannten sondern wie bei Figur 3b nach dem erfindungsgemässen Verfahren gearbeitet wird.

Bei dem durch Bohrungen 30, 31 in einem einteiligen Verteilerblock hergestellten Kanalsystem muss dieses von den Aussenflächen 32, 33 ausgebohrt werden. Besonders unvorteilhaft ist das Herstellen der Bohrungen 30, da ihre Achsen nicht senkrecht zur Aussenfläche 32 verlaufen. Das in Richtung des Pfeiles A durch die Bohrung bzw. Ausnehmung 31 zugeführte Material verteilt sich im Verzweigungsbereich 36 auf die beiden Bohrungen bzw. Ausnehmungen 30, aus welchen es quer zum Kanalsystem in die Auslässe 35 umgelenkt wird. Die sich zu den Aussenflächen 32, 33 öffnenden äussersten Teile der Bohrungen 30, 31 müssen anschliessend durch Verschlusspfropfen 30', 31' wieder dicht verschlossen werden, was infolge der notwendigen Genauigkeit einen relativ grossen Aufwand verursacht, insbesondere bei den schrägverlaufenden Bohrungen 30. Ausserdem lässt sich nicht vermeiden, dass nicht abgerundete und daher strömungsungünstige Eckbereiche 37, 38, 39 entstehen, und auch das Entfernen von bohrungsbedingten Gräten ist nicht möglich. Das sich im Bereich der Ecken und Gräten ansammelnde Material zersetzt, sich im Verlauf der Zeit und führt zu fehlerhaften Formteilen. Im Gegensatz dazu weist das in Figur 3b dargestellte Kanalsystem einen strömungsgünstigen Verlauf auf, da duch die Herstellung des Verteilerblocks aus zwei getrennten Teilblöcken das Kanalsystem quer zur Strömungsrichtung frei zugänglich ist, so dass es möglich wird, alle Ecken, Kanten und Gräten zu vermeiden und einen strömungsgünstigen Verlauf zu erhalten. Ausserdem ist das zu zerspanende Volumen kleiner und es entsteht keine Ausnehmungspartie, die wieder verschlossen werden müsste.

Die Figuren 4a und 4b zeigen einen Verteilerblock 40 mit einer Ausnehmung 42 mit grossem Querschnitt, der in zwei Ausnehmungen 44, 46 übergeht, deren Durchmesser kleiner ist, als der Durchmesser der grossen Ausnehmung 42. Bei der Herstellung nach den bekannten Verfahren erhält man dabei gemäss Figur 4a eine strömungsungünstige Stufe 48. Diese Stufe lässt sich gemäss Figur 4b vermeiden, wenn der Verteilerblock 40 nach dem erfindungsgemässen Verfahren aus zwei Teilblöcken 40', 40" hergestellt wird, da es möglich ist, anstelle der Stufe 48 einen hydraulisch glatten Übergang 49 herzustellen.

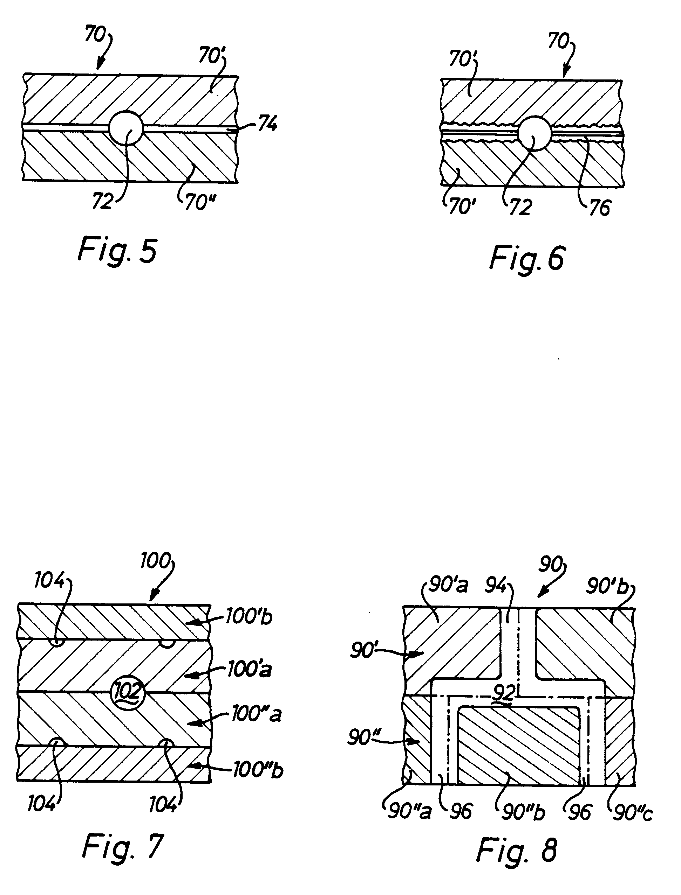

Figur 5 zeigt einen Verteilerblock 70 aus zwei Teilblöcken 70', 70" nach der Bearbeitung des Kanalsystems 72, aber vor der Durchführung des Lötvorgangs, wobei bereits eine Schicht Lot 74 in Form einer Paste oder Folie zwischen die Teilblöcke 70', 70" gebracht worden ist. Durch den beim Löten stattfindenden Diffussionsvorgang entsteht gemäss Figur 6 eine stoffschlüssige Verbindung zwischen den Teilblöcken 70', 70" durch eine Verbindungszone 76, deren mechanische und chemische Eigenschaften praktisch nicht von den Eigenschaften des Werkstoffs der Teilblöcke abweicht, so dass sich der Verteilerblock 70 mechanisch und thermisch so verhält wie ein einteiliger Verteilerblock, bei dem das Kanalsystem durch Bohrungen eingearbeitet worden ist.

Figur 8 zeigt eine weitere Ausgestaltung eines erfindungsgemässen Verteilerblocks 90, dessen Kanalsystem 92 einen vertikal gerichteten Materialeinlass 94 und zwei ebenfalls vertikal gerichtete Materialauslässe 96 aufweist, wobei das Kanalsystem 92 im übrigen horizontal verläuft. Selbstverständlich ist dieses Prinzip auch für Verteilerblöcke mit einer Vielzahl von Materialauslässen anwendbar. Um alle Ausnehmungen, die das Kanalsystem 92 bilden, zu bearbeiten, ist der obere Teilblock 90' in Blockelemente 90'a, 90'b aufgeteilt, der untere Teilblock in Blockelemente 90"a, 90"b, 90"c.

In Figur 7 ist schliesslich ein Verteilerblock 100 dargestellt, bei dem sowohl der obere Teilblock 100' als auch der untere Teilblock 100" aus zwei Blockelementen 100'a, 100'b bzw. 100"a, 100"b bestehen. Dadurch lässt sich in einfacher Weise nicht nur das Kanalsystem 102 sondern auch ein zusätzliches Kanalsystem 104, z.B. für elektrische Heizelemente oder für ein Heizmedium herstellen.

Bei den Verteilerblöcken gemäss den Figuren 7 und 8 können vorteilhafterweise die verschiedenen Lötverbindungen im gleichen Lötvorgang hergestellt werden.

Obwohl sich der erfindungsgemässe Verteilerblock besonders für die Verarbeitung von PET-Material eignet, kann er auch für eine Verteilung von anderen fliessfähigen Materialien verwendet werden, bei welchen es wichtig ist, dass der Druckabfall im Kanalsystem minimal gehalten wird und keine Materialansammlungen in Rückströmungen oder toten Ecken entstehen, wobei ausserdem die Kanalwandungen hydraulisch glatt bearbeitet werden können. Dies ist insbesondere bei allen technischen Thermoplasten der Fall.

**Patentansprüche**

1.  Heisskanal-Verteilerblock zur Verarbeitung von technischen Thermoplasten, insbesondere PET, dessen Materialeinlass über ein sich verzweigendes Kanalsystem mit mehreren Spritzgussdüsen verbunden ist, dadurch gekennzeichnet, dass zur Verminderung der Verweilzeit der thermoplastischen Schmelze das Kanalsystem einen strömungsgünstigen Verlauf aufweist und an jeder Stelle eine hydraulisch glatte Oberfläche aufweist.

2. Heisskanal-Verteilerblock nach Anspruch 1, dadurch gekennzeichnet, dass dieser aus mehreren miteinander stoffschlüssig verbundenen Teilblöcken besteht.

3. Heisskanal-Verteilerblock nach Anspruch 2, dadurch gekennzeichnet, dass die Teilblöcke durch eine Hart- und Hochtemperaturlötverbindung zusammengefügt sind.

4. Verfahren zur Herstellung eines Heisskanal-Verteilerblocks gemäss Anspruch 1, dadurch gekennzeichnet, dass mindestens zwei Teilblöcke, welche zu einem strömungsgünstig verlaufenden Kanalsystem zusammenfügbare Ausnehmungen aufweisen, derart bearbeitet werden, dass die Ausnehmungen an jeder Stelle eine hydraulisch glatte Oberfläche aufweisen, und die derart bearbeiteten Teilblöcke stoffschlüssig miteinander verbunden werden.

5. Verfahren nach Anspruch 4, dadurch gekennzeichnet, dass mindestens ein Teil der Ausnehmungen vor deren Bearbeitung, z.B. durch Fräsen, aus der Oberfläche der Teilblöcke herausgearbeitet werden.

6. Verfahren nach Anspruch 4, dadurch gekennzeichnet, dass mindestens ein Teil der Ausnehmungen vor deren Bearbeitung, z.B. durch Bohren aus einem ganzen, in die Teilblöcke zu trennenden Block herausgearbeitet werden.

7. Verfahren nach Anspruch 4 oder 6, dadurch gekennzeichnet, dass die Teilblöcke nach der Bearbeitung der Ausnehmungen zur Bildung eines strömungsgünstig verlaufenden Kanalsystem zusammengefügt werden und durch eine Hochtemperaturvakuumhartlötung miteinander verbunden werden.

Fig. 1

Fig. 2

Fig. 4a

Fig. 4b

Fig. 3a

Fig. 3b

9

*Fig. 5*

*Fig. 6*

*Fig. 7*

*Fig. 8*

**Europäisches Patentamt**

# EUROPÄISCHER RECHERCHENBERICHT

Nummer der Anmeldung

EP 93 11 1711

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | DE-A-35 23 281 (GELLERT) <br> * das ganze Dokument * <br> --- | 1-7 | B29C45/27 |
| X | EP-A-0 491 332 (MOLD-MASTERS) <br> * Spalte 3, Zeile 25 - Spalte 4, Zeile 2; Abbildungen * <br> --- | 1-7 | |
| X | EP-A-0 262 490 (AGFA-GEVAERT AG) <br> * das ganze Dokument * <br> --- | 1,2,4-6 | |
| X | PATENT ABSTRACTS OF JAPAN <br> vol. 15, no. 253 (M-1129)27. Juni 1991 <br> & JP-A-03 083 617 (FUJI PHOTO FILM CO . LTD.) <br> * Zusammenfassung * <br> --- | 1,2,4 | |
| X | DE-A-39 21 355 (SWF AUTO-ELECTRIC) <br> * das ganze Dokument * <br> ----- | 1,2,4 | |

| | RECHERCHIERTE SACHGEBIETE (Int.Cl.5) |
|---|---|
| | B29C |

Der vorliegende Recherchenbericht wurde für alle Patentansprüche erstellt

| Recherchenort | Abschlußdatum der Recherche | Prüfer |
|---|---|---|
| DEN HAAG | 3. November 1993 | BOLLEN, J |